# FASCICULE DE BREVET EUROPEEN

(11) **EP 2 020 137 B1**
(45) Date de publication et mention de la délivrance du brevet: **08.08.2012**
(21) Numéro de dépôt: 07731478.9
(22) Date de dépôt: 18.05.2007
(51) Int. Cl.: H04L 29/06

(54) **DIFFUSION DE DOCUMENTS ELECTRONIQUES PRESERVANT LES DROITS D'AUTEUR ET AUTORISANT LA COPIE PRIVEE**
AUSSTRAHLUNG VON ELEKTRONISCHEN DOKUMENTEN UNTER ERHALTUNG DES URHEBERRECHTS UND ZULASSEN VON PRIVATEM KOPIEREN
BROADCASTING OF ELECTRONIC DOCUMENTS PRESERVING COPYRIGHT AND PERMITTING PRIVATE COPYING

(30) Priorité: 24.05.2006 FR 0604653
(43) Date de publication de la demande: 04.02.2009
(73) Titulaire: Pampagnin, Noël, F-94340 Joinville le Pont (FR)
(72) Inventeur: Pampagnin, Noël, F-94340 Joinville le Pont (FR)
(86) Numéro de dépôt international: PCT/FR2007/000844
(87) Numéro de publication internationale: WO 2007/135281

(56) Documents cités:
- WO-A-01/44908
- WO-A-01/98903

## Description

### Domaine technique de l'Invention

Diffusion de documents électroniques pour tout public, sur support physique, ou par réseau de télécommunication public ou privé.

### Etat de la situation, problème posé

Les oeuvres littéraires, ou plus simplement les études et autres documents auxquels sont associés des droits d'auteur peuvent être proposés au public sous des formes nouvelles, en plus de l'impression papier traditionnelle. Ces formes nouvelles sont des documents électroniques livrés en divers formats standards, comme PDF (Portable Document Format) d'Adobe Systems ou LIT de Microsoft. Chacune de ces compagnies fournit un afficheur gratuit qui permet la lecture de tels documents sur, selon le cas, ordinateurs de bureau, ordinateurs portables, assistants personnels, mobiles, et plus généralement sur tous types d'appareils comprenant un processeur, une mémoire permanente, et supportant des programmes.

Ces documents, livrés sur supports physiques comme les CD ROM, ou téléchargés depuis un réseau privé ou public comme internet, étant sous forme électronique, sont aisément copiables à l'infini, au détriment des droits légitimes des auteurs.

Pour garantir les droits des auteurs, les compagnies à l'origine des formats de lecture ont associé aux documents des droits numériques qui précisent les actions autorisées sur les documents, comme l'autorisation d'imprimer, d'effectuer des copies, d'ajouter des annotations, etc. Ces actions sont gérées par un serveur de droits qui délivre une copie du document et de ses droits au client sur une ou plusieurs machines en nombre limité. Par la suite, le client ne peut pas effectuer une autre copie sur une autre machine, même s'il s'agit d'une copie privée.

Le document WO 01/44908 décrit une architecture de serveur destinée à un système de gestion de droits numériques qui répartit et protège les droits de contenus. Cette architecture de serveur comprend un site de vente au détail qui vend des articles de contenu à des consommateurs, un site d'exécution qui fournit aux consommateurs les articles de contenu vendus par le site de vente au détail, et un site d'activation qui permet aux dispositifs de lecture du consommateur d'utiliser les articles de contenu qui présentent un niveau élevé de protection contre la copie.

La présente invention permet au client qui a acheté un document sur CD ROM, ou par internet, de le consulter sur une machine quelconque supportant le format du lecteur choisi, et d'effectuer autant de copies privées que souhaité, sans pour cela porter atteinte aux droits légitimes des auteurs.

### L'Invention

L'usage qu'un lecteur peut faire d'un document électronique n'est pas le même que pour un document imprimé. A concept nouveau, usage nouveau. Il n'est pas utile qu'un document électronique remplace dans toutes ses fonctions un document imprimé. Il faut plutôt imaginer qu'un document électronique ajoute des fonctions à la forme imprimée, qui reste la forme de référence, et la forme d'archivage préférentielle. Par contre, la forme électronique téléchargeable et peu coûteuse, peut permettre une consultation des documents immédiate, aisée, à partir de chez soi, et stockable en peu de place.

Mais l'acquisition des documents sous forme électronique pour un coût modique ne doit pas porter atteinte aux droits des auteurs. Pour ce faire, et c'est l'objet de l'invention, chaque document téléchargé (ou livré sur CD ROM) doit contenir les droits numériques acquis définitivement, comme le droit d'imprimer, un identifiant unique, et un agent de supervision gérant les droits de consultation contrôlés. Cet agent, par exemple, peut permettre d'ouvrir le document un certain nombre de fois par jour, pendant une période donnée. En dehors de ces contraintes, le document n'est pas lisible.

Afin de vérifier les droits associés au document, cet agent, dénommé agent de supervision, ou superviseur, est ajouté à chaque exemplaire du document. A chaque ouverture du document, ou par la sélection d'un objet particulier, tel qu'un signet, cet agent se connecte à un serveur de contrôle au travers d'un réseau public ou privé, lui fournit au moins son identifiant unique sous forme cryptée, et d'autres informations de contrôle si besoin est. En retour, le serveur lui envoie sous forme cryptée un acquittement positif, si le document peut être consulté. En l'absence de cet acquittement positif, le document ne peut pas être consulté. L'emploi de données cryptées, ou masquées, au cours des échanges est indispensable pour éviter l'usurpation du serveur de contrôle par un serveur pirate.

On voit bien que ce type de document peut être recopié à l'infini sans porter atteinte aux droits de l'auteur, puisqu'en tout état de cause, ce document et toutes ses copies ayant le même identifiant unique seront perçus comme un même document par le serveur de contrôle. Leur lecture sera donc conditionnée par l'enregistrement de tous les accès au serveur de contrôle effectués par le document d'origine et par toutes ses copies. Ce procédé permet donc la copie privée. En outre, le transfert du document à un tiers ne porte atteinte qu'aux droits de consultation acquis par le client, et non aux droits de l'auteur.

L'agent de supervision de chaque document électronique est ajouté à l'exemplaire du client lors de la génération du dit exemplaire par un serveur de livraison à partir du modèle du document original. Pour ce faire, on utilise une bibliothèque de création de documents « à la volée », ou l'interface de programmation fournie par les compagnies auteurs des formats standard de documents électroniques. L'ensemble, agent plus document, est scellé, et protégé par les mécanismes de cryptage correspondant à l'état de l'art, fournis par les compagnies nommées ci-dessus, telles qu'Adobe Systems ou Microsoft.

Les droits numériques définitivement acquis par le client sont aussi inclus dans le document ainsi créé par le serveur de livraison, en fonction des choix du client, et de la politique commerciale du distributeur. On peut imaginer une commande différente, avec un prix différent pour des droits différents : droits d'impression, de copier, etc.

En outre, le prix de vente peut tenir compte d'une période de consultation plus ou moins longue du document, d'une fréquence de consultation quotidienne plus ou moins grande, etc. Ces derniers critères, qui constituent les droits numériques contrôlés par le serveur de contrôle, ainsi que l'identifiant unique du document, sont envoyés au serveur de contrôle par le serveur de livraison, après la génération de l'exemplaire client

Ceci nous amène à évoquer le premier élément de la chaine, qui est le serveur de commande, dans le cas des documents téléchargeables. Dans le cas de génération de documents sur support physique, il n'y a pas de serveur de commande, puisqu'il n'y a pas de commande. Les documents sont générés par le serveur de livraison avec un identifiant unique, sans identifiant de commande.

Ce serveur de commande peut être un serveur http, s'il est accessible par internet ou intranet, et contient les modèles des documents à diffuser, une base article avec notamment les prix, une base client avec, l'adresse de messagerie électronique du client, et selon le cas, les identités et coordonnées des clients, une base commande contenant notamment les références des ouvrages commandés. Après accord sur une transaction commerciale entre le client et le diffuseur, par exemple après un paiement valide par carte bancaire donnant le droit de consulter un ouvrage de la base, un enregistrement de livraison pour le document commandé est créé sur le serveur de livraison, puis un message contenant un lien vers le serveur de livraison est envoyé au client, par exemple par messagerie électronique.

L'activation de ce lien par le client enclenche la génération de l'exemplaire spécifique destiné au client, à partir du modèle générique du document. Cet exemplaire pourra contenir une première page rappelant l'identité et les coordonnées du client, ainsi que les droits de consultation et les autres droits numériques qu'il a acquis. A la fin de la génération, un enregistrement de contrôle est créé sur le serveur de contrôle, contenant au moins l'identifiant unique du dit exemplaire, et d'autres critères comme la période de consultation et la fréquence quotidienne de consultation. Le document est ensuite téléchargé sur la machine du client, qui aura l'initiative de sauvegarder le dit document lorsqu'apparaîtra le message de fin de transfert. Le document ainsi complètement et correctement reçu par le client ne pourra pas être généré une nouvelle fois, mais pourra faire l'objet de copies privées à tout moment.

Le document sera consultable uniquement selon les contraintes négociées entre le client et le diffuseur au moment de la commande sur toute machine supportant le format choisi et dotée d'un accès internet, intranet, ou autre réseau selon le cas, qui permette la vérification par le serveur de contrôle des droits acquis par le client concernant l'ouvrage numérique. A l'issue de la période négociée, il ne sera plus consultable du tout.

Bien entendu, le serveur http présentant sur internet les documents, le serveur de commande, le serveur de livraison, et le serveur de contrôle peuvent être supportés par la même machine, ou par des machines différentes.

Dans le cas de livraison de documents sur supports physiques, il n'y a pas de serveur http, pas de serveur de commande. Il y a seulement un serveur de livraison et un serveur de contrôle.

### Les dessine

### Figure 1/4

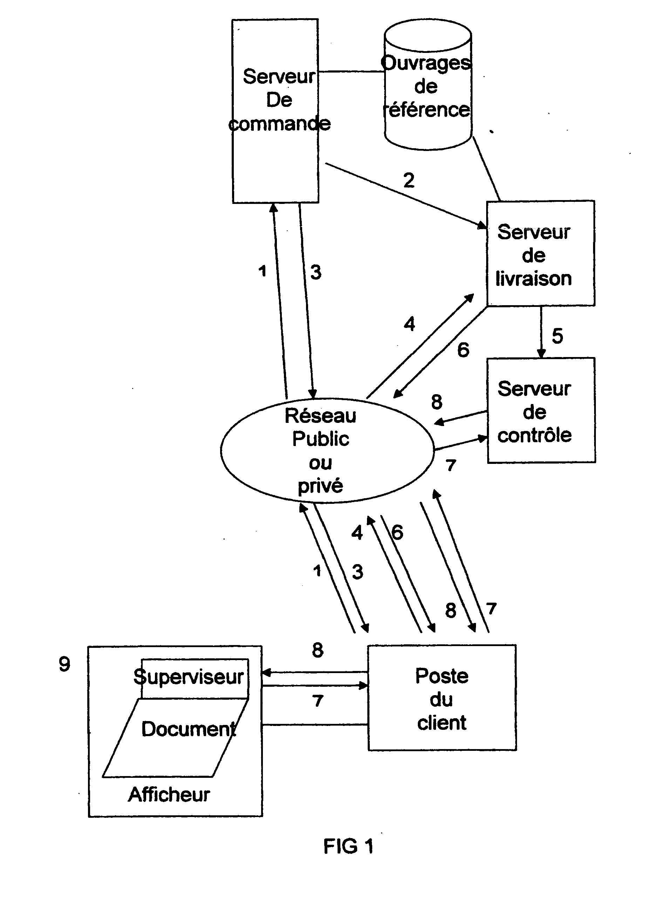

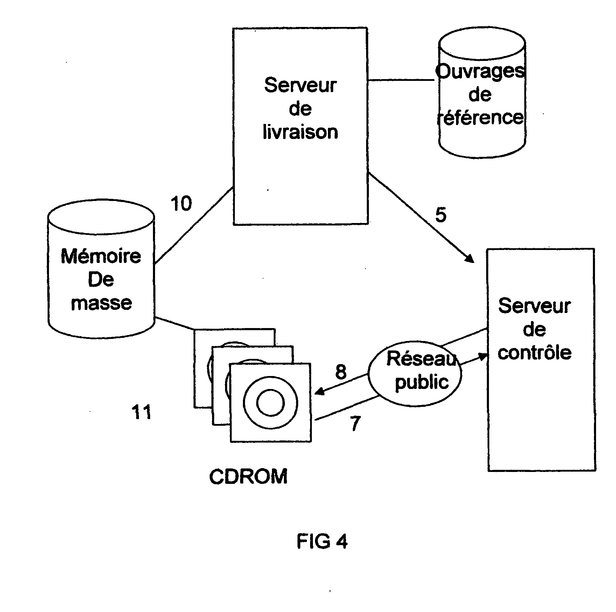

L'enchainement des actions le plus général pour une commande d'ouvrage numérique par internet est décrit dans la Figure 1 /4
1 Le client accède au serveur de commande http, choisit son ouvrage dans la base d'ouvrages de référence, et le commande
2 Le serveur de commande envoie les informations de commande au serveur de livraison, comprenant au moins la référence de l'ouvrage, les coordonnées du client, les droits de consultation contrôlable, et les autres droits numériques commandés.
3 Le serveur de commande répond à la commande du client en lui envoyant, par exemple, par messagerie électronique, un lien vers le serveur de livraison, comprenant en paramètre au moins l'identifiant unique de l'exemplaire commandé.
4 Le client active ce lien, ce qui provoque la génération par le serveur de livraison d'un exemplaire spécifique de l'ouvrage commandé, contenant l'agent de supervision du document, et les autres droits numériques acquis définitivement relatifs au document, comme l'autorisation d'imprimer ou de copier.
5 Le serveur de livraison envoie les informations de contrôle au serveur de contrôle, comprenant au moins l'identifiant unique du dit exemplaire, et des critères comme la période de consultation et la fréquence quotidienne de consultation.
6 Cet exemplaire spécifique généré par le serveur de livraison est téléchargé à la suite sur le poste client, puis il est stocké sur le poste client. Le client peut en faire une copie privée à ce moment ou par la suite. Chaque copie contient le même identifiant unique et l'agent de supervision.
7 En vue d'une consultation, le dit exemplaire émet via le réseau public ou privé une requête spécifique vers le serveur de contrôle, contenant au moins son identifiant unique.
8 En réponse, le serveur de contrôle retourne au client l'autorisation de consultation du dit exemplaire, ou un refus de consultation, en fonction des droits en cours concernant l'ouvrage acquis par le client.
9 Le document est consultable ou non consultable dans l'afficheur choisi par le client.

### Figure 2/4

Lecture d'un document avec contrôle des droits
7 - Le contrôleur du document émet une requête contenant au moins son identifiant unique vers le serveur de contrôle, au travers d'un réseau de télécommunication public ou privé.
8 - En réponse, le serveur de contrôle retourne au client l'autorisation de consultation de cet exemplaire spécifique, ou un refus de consultation, en fonction des droits de consultation en cours concernant l'exemplaire acquis par le client.
9 - Le document est consultable ou non consultable dans l'afficheur choisi par le client.

### Figure 3/4

Même procédé général que la Figure 1/4, mais les serveurs de commande, de livraison et de contrôle sont supportés par la même machine

### Figure 4/4

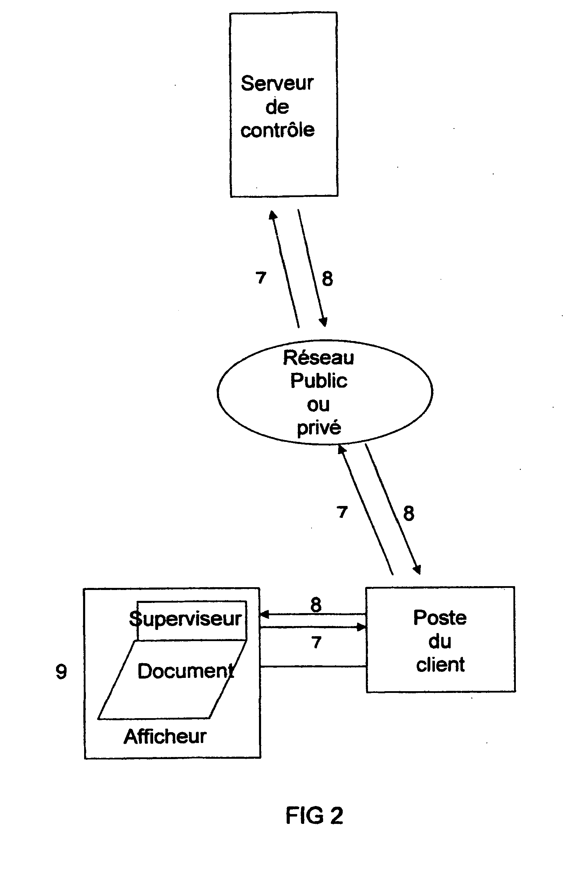

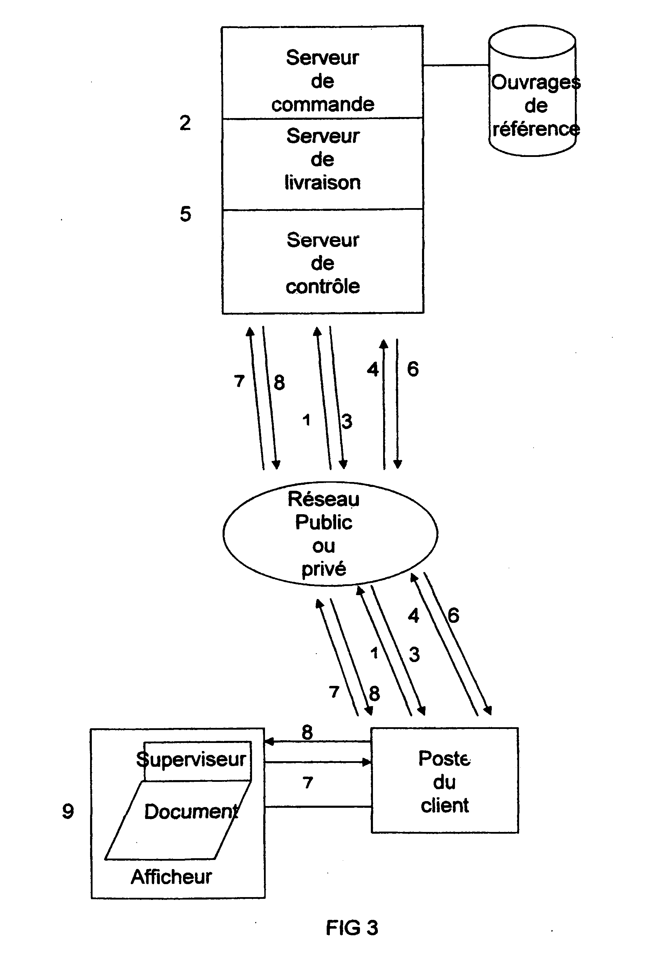

Génération de documents pour supports physiques tels que CD ROM.
10 - Génération en masse par le serveur de livraison des documents à partir des modèles d'ouvrages. Chaque document généré contient un agent de supervision intégré, les droits numériques définitifs, et au moins un identifiant unique.
5- Envoi par le serveur de livraison au serveur de contrôle des informations de contrôle relatives à chaque document généré, notamment l'identifiant unique, la période de consultation et la fréquence quotidienne de consultation.
11- Gravage des documents générés sur support physique
7, 8 - Lecture des documents générés par le client, après vérification des droits de consultation par le serveur de contrôle, selon le procédé décrit par la Figure 2/4.

### Un mode de réalisation du procédé

### Organisation générale

Le procédé de création de documents électroniques qui permet la protection des droits des auteurs et la copie privée comporte un serveur de commande pour la prise de commandes par les clients (1) accessible depuis un réseau privé ou public tel qu'intemet ; un serveur de livraison accessible depuis le même réseau, pour générer l'exemplaire spécifique commandé par le client ; un serveur de contrôle accessible sur le même réseau, destiné à vérifier les droits numériques acquis par le client ; un ordinateur de bureau, ou un ordinateur portable, ou un assistant personnel, ou tout autre équipement supportant un afficheur parmi au moins deux afficheurs du marché, destiné à consulter le document. Le dit exemplaire de chaque document est généré par le serveur de livraison à partir du modèle du document commandé (1), et des droits numériques commandés (1), transmis par le serveur de commande (2). Il contient un agent de supervision (ou superviseur) destiné à vérifier les droits en cours au moment de la consultation, stockés sur le serveur de contrôle (5). Le dit exemplaire contient aussi les autres droits numériques acquis définitivement par le client et non contrôlés par la suite. La génération du dit exemplaire est déclenchée par le client (4), en activant un lien URL vers le serveur de livraison contenant au moins l'identifiant unique de l'exemplaire commandé. Ce lien a été préalablement envoyé via la messagerie électronique, ou tout autre moyen, par le serveur de commande à destination du client (3). Le dit exemplaire est chargé sur l'équipement du client à l'issue de la génération (6), et peut être sauvegardé plusieurs fois en copie privée. Le dit exemplaire, ou ses copies, ne peuvent être consultés qu'après émission d'une requête contenant l'identifiant unique du dit exemplaire, envoyée par l'agent de supervision vers le serveur de contrôle (7), et la réception de la réponse autorisant la consultation (8).

Le procédé peut être réalisé avec les serveurs de commande, de livraison, et de contrôle supportés par une seule machine

Le procédé est applicable s'il comporte uniquement un serveur de livraison destiné à la production de masse d'ouvrages numériques sur supports physiques à partir de modèles de documents et de droits numériques, et un serveur de contrôle destiné à contrôler les droits numériques contrôlés attachés à chaque exemplaire par le serveur de livraison, et vérifiés à chaque consultation d'ouvrage numérique

La réponse du serveur de contrôle peut être un simple acquittement positif (8)

La réponse du serveur de contrôle peut contenir un ensemble de droits numériques contrôlés applicables à l'exemplaire commandé (8)

### Génération de l'exemplaire commandé par le client

Un programme de génération est supporté par le serveur de livraison qui génère l'exemplaire de l'ouvrage commandé par le client (6) à partir d'un modèle du document commandé et des droits commandés (2). Le dit programme intègre à l'exemplaire un agent de supervision gérant les droits numériques contrôlés comme la période autorisée pour la consultation, la fréquence quotidienne de consultation, le nombre total de consultations, etc. et l'ensemble des droits numériques non contrôlés acquis par le client comme l'autorisation d'imprimer, de copier, etc. L'ensemble est scellé et ne peut pas être modifié. Le dit programme génère l'enregistrement de contrôle de l'exemplaire commandé et le stocke sur le serveur de contrôle (5)

Ce programme peut ajouter à l'exemplaire généré un texte rappelant l'identité et les références de l'acquéreur de l'exemplaire de l'ouvrage, et éventuellement les droits acquis par l'acquéreur

### Agent de supervision

Un agent de supervision est intégré à chaque exemplaire du document généré. C'est un programme qui autorise ou refuse la consultation du dit exemplaire, par le moyen de l'envoi d'une requête à un serveur de contrôle via un réseau public ou privé contenant au moins l'identifiant unique de l'exemplaire (7). La réponse du serveur de contrôle autorisant ou refusant la consultation de l'exemplaire (8) est traitée par le dit agent, qui divulgue ou pas le contenu du document

### Serveur de contrôle

Le serveur de contrôle supporte un programme de contrôle qui génère une réponse positive ou négative (8) aux requêtes des exemplaires identifiés par leur identifiant unique (7), en fonction des droits numériques en cours relatifs aux dits documents, par exemple la période autorisée pour la consultation, la fréquence quotidienne de consultation, le nombre total de consultations, etc

Ce programme de contrôle peut générer en plus un document rappelant les droits en cours relatifs à l'exemplaire, et éventuellement les coordonnées de l'acquéreur, envoyé au poste client avec la réponse à la requête du dit exemplaire

## Revendications

1. Le procédé de création d'au moins un document électronique permettant la protection des droits des auteurs et la copie privée **caractérisé en ce qu'**il comporte un serveur de commande pour la prise de commandes par les clients (1) accessible depuis un réseau privé ou public tel qu'internet ; un serveur de livraison accessible depuis le même réseau, pour générer l'exemplaire spécifique commandé par le client ; un serveur de contrôle accessible sur le même réseau, destiné à vérifier les droits numériques acquis par le client ; un ordinateur de bureau, ou un ordinateur portable, ou tout autre équipement supportant un afficheur parmi au moins deux afficheurs du marché, destiné à consulter le document. Le dit exemplaire de chaque document est généré par le serveur de livraison à partir du modèle du document commandé (1), et des droits numériques commandés (1), transmis par le serveur de commande (2). *Il contient un identifiant unique, et un agent de supervision (ou superviseur) destiné à vérifier les droits en cours au moment de la consultation, en interrogeant la base de droits stockée sur le serveur de contrôle (5).* Le dit exemplaire contient aussi les autres droits numériques acquis définitivement par le client et non contrôlés par la suite. La génération du dit exemplaire est déclenchée par le client (4), en activant un lien URL vers le serveur de livraison contenant au moins l'identifiant unique de l'exemplaire commandé. Ce lien a été préalablement envoyé via la messagerie électronique, ou tout autre moyen, par le serveur de commande à destination du client (3). Le dit exemplaire est chargé sur l'équipement du client à l'issue de la génération (6), et peut être sauvegardé plusieurs fois en copie privée. Le dit exemplaire, ou ses copies, ne peuvent être consultés qu'après émission d'une requête contenant l'identifiant unique du dit exemplaire, envoyée par l'agent de supervision vers le serveur de contrôle (7), et la réception de la réponse autorisant la consultation (8).

2. Le procédé selon la revendication 1 **caractérisé en ce que** les serveurs de commande, de livraison, et de contrôle sont supportés par une seule machine.

3. Le procédé selon la revendication 1 **caractérisé en ce qu'**il comporte uniquement un serveur de livraison destiné à la production de masse d'ouvrages numériques sur supports physiques à partir de modèles de documents et de droits numériques, et un serveur de contrôle destiné à contrôler les droits numériques contrôlés attachés à chaque exemplaire par le serveur de livraison, et vérifiés à chaque consultation d'ouvrage numérique.

4. Le procédé selon la revendication 1 **caractérisé en ce que** la réponse du serveur de contrôle est un simple acquittement positif (8)

5. Le procédé selon la revendication 1 **caractérisé en ce que** la réponse du serveur de contrôle contient un ensemble de droits numériques contrôlés applicables à l'exemplaire commandé (8)

6. Le procédé selon la revendication 1 mettant en oeuvre un programme de génération supporté par le serveur de livraison **caractérisé en ce qu'**il génère l'exemplaire de l'ouvrage commandé par le client (6) à partir d'un modèle du document commandé et des droits commandés (2). Le dit programme intègre à l'exemplaire un *identifiant unique et un* agent de supervision gérant les droits numériques contrôlés comme la période autorisée pour la consultation, la fréquente quotidienne de consultation, le nombre total de consultations, etc. et l'ensemble des droits numériques non contrôlés acquis par le client comme l'autorisation d'imprimer, de copier, etc. L'ensemble est scellé et ne peut pas être modifié. Le dit programme génère l'enregistrement de contrôle de l'exemplaire commandé *référencé Par l'identifiant unique* et le stocke sur le serveur de contrôle (5).

7. Un programme selon la revendication 6 **caractérisé en ce qu'**il ajoute à l'exemplaire généré un texte rappelant l'identité et les références de l'acquéreur de l'exemplaire de l'ouvrage, et éventuellement les droits acquis par l'acquéreur.

8. le procédé selon la revendication 1 mettant en oeuvre un agent de supervision intégré à chaque exemplaire du document généré **caractérisé en ce qu'**il autorise ou refuse la consultation du dit exemplaire, par le moyen de l'envoi d'une requête à un serveur de contrôle via un réseau public ou privé contenant au moins l'identifiant unique de l'exemplaire (7). La réponse du serveur de contrôle autorisant ou refusant la consultation de l'exemplaire (8) est traitée par le dit agent, qui divulgue ou pas le contenu du document.

9. Le procédé selon la revendication 1 mettant en oeuvre un programme de contrôle supporté par le serveur de contrôle **caractérisé en ce qu'**il génère une réponse positive ou négative (8) aux requêtes des exemplaires identifiés par leur identifiant unique (7), en fonction des droits numériques en cours relatifs aux dits documents, par exemple la période autorisée pour la consultation, la fréquence quotidienne de consultation, le nombre total de consultations, etc.

10. Un programme de contrôle selon la revendication 9 **caractérisé en ce qu'**il génère en plus un document rappelant les droits en cours relatifs à l'exemplaire, et éventuellement les coordonnées de l'acquéreur, envoyé au poste client avec la réponse à la requête du dit exemplaire.

## Claims

1. The electronic document creation method enabling the protection of the copyrights of at least one digital document and private copying, wherein it comprises : an order server for the handling of orders by the customers (1) accessible from a private or public network such as Internet; a delivery server accessible from the same network, for generating the specific copy ordered by the customer; a desktop computer, a portable computer, a personal digital assistant, or any other equipment supporting one viewer among the at least two viewers from the market, intended to consult the document.
Said copy of each document is generated by the delivery server from the model of the ordered document (1) and the ordered digital rights (1) transmitted by the order server (2).
It contains a unique identifier and a supervision (or supervisor) agent intended to verify, at the moment of the consultation, the current rights, stored in a data base in the control server (5).
Said copy also contains the other digital rights permanently acquired by the customer and not subsequently verified.
The generation of said copy is triggered by the customer (4), by activation of a URL link to the delivery server containing at least the unique identifier of the ordered copy.
This link was previously sent to the customer (3) by the order server via electronic messaging, or any other means.
Said copy is loaded on the customer's equipment at the end of the generation (6) and can be backed up several times by private copying.
Said copy, or its duplicates, can only be consulted after sending a query containing the unique identifier of said copy, sent by the supervision agent towards the control server (7), and receiving the response authorizing the consultation (8).

2. The method according to claim 1, wherein the order, delivery and control servers are supported by a single machine.

3. The method according to claim 1, wherein it comprises only one delivery server intended for the mass production of digital works on physical media from document models and digital rights, and a control server intended to control the controlled digital rights attached to each copy by the delivery server, and verified on each digital work consultation.

4. The method according to claim 1, wherein the response from the control server is a simple positive acknowledgment.

5. The method according to claim 1, wherein the response of the control server contains a set of digital rights applicable to the ordered copy (8).

6. The method according to claim 1, wherein implementing a generation program supported by the delivery server generating the copy of the work ordered by the customer (6) from the model of the ordered document and the ordered rights (2).
Said program integrates with the copy a unique identifier and a supervision agent managing the controlled digital rights like the period authorized for the consultation, the daily frequency of consultation, the total number of consultations etc. and the set of uncontrolled digital rights acquired by the customer like the authorization to print, copy, etc.
The set is sealed and cannot be modified.
Said program generates the control record of the ordered copy referenced by the unique identifier and stores it on the control server (5).

7. The program according to claim 6, wherein it adds a text to the generated copy reviewing the identity and references of the acquirer of the copy of the work, and optionally the rights acquired by the acquirer.

8. The method according to claim 1, wherein implementing a supervision agent integrated in each copy of the document, authorizing or refusing the consultation of the said copy, by means of sending a query containing at least one unique identifier of the copy (7) to the control server via the public or private network. The response from the control server authorizing or refusing the consultation of the copy (8) is handled by said agent, which discloses the content of the document or not.

9. The method according to claim 1, wherein implementing a control program supported by the control server generating a positive or negative response (8) to the requests from the copies identified by their unique identifier (7), according to the current digital rights concerning said documents, for example the authorized period for the consultation, the daily frequency of consultation, the total number of consultations, etc.

10. The control program according to claim 9, wherein it additionally generates a document reviewing the current rights relative to the copy, and potentially the contact information of the acquirer, sent to the customer workstation with the response to the query from said copy.

## Patentansprüche

1. Das Erstellungsverfahren mindestens eines elektronischen Dokuments, das den Schutz der Urheberrechte und die private Kopie erlaubt, und sich dadurch auszeichnet, dass es einen Bestellungsserver zur Aufnahme der Bestellung durch die Kunden (1) besitzt, auf den Zugriff von einem privaten oder öffentlichen Netz, wie z.B. Internet aus möglich ist; einen vom selben Netz aus erreichbaren Lieferungsserver, um das spezifische vom Kunden bestellte Exemplar zu erstellen; ein über dasselbe Netz aus erreichbarer Kontrollserver zur Überprüfung der vom Kunden erworbenen digitalen Rechte; ein Büro-PC oder ein Laptop oder ein Personal Assistent oder jegliche andere Ausrüstung, die eine von mindestens zwei Anzeigen des Auftrags beinhaltet, um das Dokument einsehen zu können. Das besagte Exemplar jedes Dokuments wird vom Lieferungsserver anhand eines Modells des bestellten Dokuments (1) und der bestellten digitalen Rechte (1) erstellt, die vom Bestellungsserver (2) übermittelt werden. Es enthält eine unverwechselbare ID und einen Überwachungsagenten (oder Supervisor), um die im Moment der Abfrage aktuellen Rechte zu überprüfen. Dies erfolgt durch Nachfrage in der auf dem Kontrollserver (5) Rechtedatenbank. Das besagte Exemplar enthält auch die anderen digitalen Rechte, die der Kunde endgültig erhalten hat und die danach nicht kontrolliert werden. Die Erstellung des besagten Exemplars wird vom Kunden (4) ausgelöst, indem er einen URL-Link zum Lieferungsserver aktiviert, der mindestens eine unverwechselbare ID des bestellten Exemplars enthält. Dieser Link wurde zuvor über die Mailbox, oder jegliches andere probate Mittel mit dem Bestellungsserver an den Kunden (3) geschickt. Das besagte Exemplar wird nach der Erstellung (6) auf den Einrichtungen des Kunden geladen und kann mehrmals als private Kopie gespeichert werden. Die Einsicht in das besagte Exemplar oder seine Kopien ist nur möglich, nachdem eine Anfrage erfolgt ist, die die unverwechselbare ID dieses Exemplars enthält, die vom Überwachungsagenten an den Kontrollserver (7) gesendet wurde und nach Erhalt der Antwort, die Einsicht erlaubt (8).

2. Das Verfahren gemäß Anspruch 1 ist **dadurch gekennzeichnet, dass** Bestellungs-, Lieferungs- und Kontrollserver von einem einzigen Rechner unterstützt werden.

3. Das Verfahren gemäß Anspruch 1 ist **dadurch gekennzeichnet, dass** es nur einen Lieferungsserver besitzt, der zur Massenproduktion digitaler Werke auf physischen Trägermaterialien ausgehend von Dokumentenmodellen und digitalen Rechten dient, sowie einen Kontrollserver zur Kontrolle der kontrollieren digitalen Rechte, die jedem Exemplar durch den Lieferungsserver angehängt werden und bei jeder Einsicht eines digitalen Werks überprüft werden.

4. Das Verfahren gemäß Anspruch 1 ist **dadurch gekennzeichnet, dass** die Antwort des Kontrollservers eine einfache positive Quittierung (8) ist

5. Das Verfahren gemäß Anspruch 1 ist **dadurch gekennzeichnet, dass** die Antwort des Kontrollservers ein Gesamtpaket kontrollierter, auf das bestellte Exemplar (8) anwendbarer digitaler Rechte enthält

6. Das Verfahren gemäß Anspruch 1 implementiert ein vom Lieferungsserver unterstütztes Erstellungsprogramm das **dadurch gekennzeichnet ist, dass** es das Exemplar des vom Kunden (6) bestellten Werks von einem Modell des bestellten Dokuments und der bestellten Rechte (2) aus erstellt. Das besagte Programm implementiert im Exemplar eine unverwechselbare ID und einen Überwachungsagenten zur Verwaltung der kontrollierten digitalen Rechte, wie erlaubte Zugriffsdauer, tägliche Zugriffshäufigkeit, Gesamtzahl der Zugriffe usw. sowie die gesamten vom Kunden erworbenen nicht kontrollierten digitalen Rechte, wie Erlaubnis zum Drucken, Kopieren usw. Das Gesamtpaket ist versiegelt und kann nicht modifiziert werden. Das besagte Programm erstellt die Kontrollaufzeichnung des per unverwechselbarer ID referenzierten, bestellten Exemplars und speichert sie auf dem Kontrollserver (5).

7. Ein Programm gemäß Anspruch 5, das **dadurch gekennzeichnet ist, dass** es dem erstellten Exemplar einen Text beifügt, der Identität und Referenzen des Käufers dieses Exemplars des Werks angibt sowie eventuell die vom Käufer erworbenen Rechte.

8. Das Verfahren gemäß Anspruch 1 implementiert einen in jedes Exemplar des erstellten Dokuments integrierten Überwachungsagenten, der **dadurch gekennzeichnet ist, dass** er den Zugriff auf das besagte Exemplar erlaubt oder untersagt, indem er über ein privates oder öffentliches Netz eine Anfrage an einen Kontrollserver sendet, die mindestens die unverwechselbare ID des Exemplars (7) enthält. Die Antwort des Kontrollservers bezüglich Erlaubnis oder Verweigerung des Zugriffs auf das Exemplar (8) wird von besagtem Agenten bearbeitet, der den Inhalt des Dokuments entweder preisgibt oder nicht.

9. Das Verfahren gemäß Anspruch 1 implementiert ein vom Kontrollserver unterstütztes Kontrollprogramm, das **dadurch gekennzeichnet ist, dass** es eine positive oder negative Beantwortung (8) der Anfragen für die durch ihre unverwechselbare ID (7) identifizierten Anfragen vornimmt, je nach aktuellen digitalen Rechten bezüglich der besagten Dokumente, z. B. erlaubte Zugriffsdauer, tägliche Zugriffshäufigkeit, Gesamtzahl der Zugriffe usw.

10. Ein Kontrollprogramm gemäß Anspruch 9, das **dadurch gekennzeichnet ist, dass** es zusätzlich ein Dokument erstellt, das die aktuellen Rechte bezüglich des Exemplars enthält, sowie eventuell die Kontaktangaben des Käufers und mit der Antwort auf die Anfrage zu besagtem Exemplar an den Kundenrechner gesendet wird.
